# NEUE EUROPÄISCHE PATENTSCHRIFT

(11) **EP 0 685 953 B2**
(45) Veröffentlichungstag und Bekanntmachung des Hinweises auf die Entscheidung über den Einspruch: **04.02.2009**
(45) Hinweis auf die Patenterteilung: 26.03.2003
(21) Anmeldenummer: 95107810.4
(22) Anmeldetag: 22.05.1995
(51) Int. Cl.: H04M 1/02

(54) **Funksprechgerät**
Radio telephone
Radio téléphone

(30) Priorität: 27.05.1994 DE 4418616
(43) Veröffentlichungstag der Anmeldung: 06.12.1995
(73) Patentinhaber: SIEMENS AKTIENGESELLSCHAFT, 80333 München (DE)
(72) Erfinder: Dafcik, Juan, Dipl. Ing., D-85375 Neufahrn (DE); Christal, Philip, D-85646 Anzing (DE)

(56) Entgegenhaltungen:
- EP-A- 0 463 856
- EP-A- 0 588 210
- US-A- 5 239 700

## Beschreibung

Die Erfindung bezieht sich auf ein Funksprechgerät mit einem Tastenfeld mit Wähl- und Funktionstasten und einem Anzeigefeld (Display) sowie mit Sende-/Empfangs- und Steuereinrichtungen.

Ein solches Funksprechgerät ist beispielsweise aus der deutschen Auslegeschrift 30 15 050 bekannt. Die vorhandenen Tastaturen dienen dabei zur Bedienung des Gerätes. Über diese erfolgt die Ansteuerung der Funktionen, z.B. die Wahl der anzurufenden Telefonnummer oder die Benutzung von Hilfsfunktionen. Sie werden mit Hilfe von Cursor-Tasten und der entsprechenden Darstellung auf dem Display unterstützt.

Die Patentschrift EP-A-0 588 210 offenbart ein Funksprechgerät mit einem beweglichen Eingabemittel. Hierin wird im Wesentlichen eine Cursor- und Funktionssteuerung in der Ebene eines Displays mit Hilfe einer dreh- und schiebbaren Walze beschrieben. Die Ebene des Displays ist dabei durch die beiden orthogonalen Achsen *x* und *y* eines kartesischen Koordinatensystems für die Bewegung des Cursors in horizontaler Richtung (also in ±*x*-Richtung) bzw. vertikaler Richtung (also in ±*y*-Richtung) hinreichend beschrieben. Durch ein Drehen der Walze in ±ϕₓ-Richtung um eine parallel zur *x*-Achse angeordenete Achse Aₓ kann der Cursor in vertikaler Richtung (±*y*-Richtung) bewegt werden (Oben-/Unten-Verschiebung des Cursors). Die Schiebefähigkeit der Walze dient für die Navigation des Cursors in horizontaler Richtung (±*x*-Richtung), also für die Rechts- bzw. Links-Verschiebung des Cursors. Da die Walze neben den Steuerfunktionen für den Cursor auch noch als Scharnier bzw. Stabgelenk für das Zusammenklappen von Display und Tastatur ausgebildet ist, ergibt sich als Nachteil ein großer mechanischer Herstellaufwand und eine verschleißanfällige Komponente in dieser Konstruktion.

Der Erfindung liegt die Aufgabe zugrunde, eine Lösung anzugeben für eine einfache Bedienung hinsichtlich der über die Tastatur einzugebenden verschiedenen Funktionen.

Diese Aufgabe wird gemäß der Erfindung gelöst durch wenigstens eine in verschiedene Richtungen eines kartesischen Koordinatensystems bewegliche Taste (Navigationstaste), über die die Ansteuerung bestimmter Funktionen und Darstellung auf dem Display erfolgt, wobei es sich bei der beweglichen Taste um eine Navigationstaste mit einer Bewegungsfreiheit in die vier Richtungen der x- und y-Achse des Koordinatenkreuzes handelt.

Vorteilhafte Ausgestaltungen und Weiterbildungen des Erfindungsgegenstandes sind in den Unteransprüchen angegeben.

Nachstehend wird die Erfindung anhand von zwei in der Zeichnung dargestellten Ausführungsbeispielen näher erläutert.

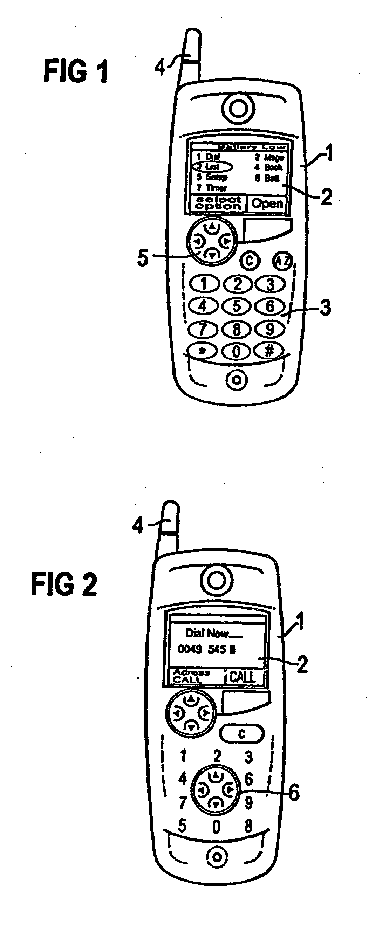

Die Figuren 1 und 2 zeigen jeweils ein Funksprechgerät 1 in der Draufsicht. Diese weisen im oberen Bereich der Oberseite ein Display 2 und im unteren Bereich Tastaturen 3 auf. An der oberen Stirnseite des Gerätes ist eine Antenne 4 angeordnet.

Beim Funksprechgerät nach Figur 1 ist eine Navigationstaste 5 vorgesehen, die in *x*- und *y*-Richtung, also den vier Hauptrichtungen eines katesischen Koordinatenkreuzes beweglich ist. Mit dieser Taste 5 werden Funktionalitäten implementiert, insbesondere die Ansteuerung bestimmter Funktionen auf dem Display. Die Taste 5 mit einer Bewegungsfreiheit in vier Richtungen ist also für die Menueansteuerung vorgesehen. Das Übernehmen der gewählten Funktion wird dabei mit Druck auf der Navigationstaste bestätigt.

Beim Funksprechgerät nach Figur 2 ist eine weitere Navigationstaste 6 vorgesehen, die eine 360° Selektionsmöglichkeit bietet und für die Nummernwahl verwendet werden kann. Die Navigationstaste 6 ist in dem Bereich angeordnet, in dem sich beim Funksprechgerät gemäß Figur 1 das Tastenfeld befindet.

Um die Taste 6 herum sind die Ziffern für die Nummernwahl eingezeichnet. Ihre Position gibt die Richtung an, in welcher die Navigationstaste 6 bei der Nummernwahl jeweils zu drücken ist.

Der Vorteil dieser Navigationstasten besteht in einer einfachen Bedienung des Gerätes durch Betätigung von wenigen Tasten und entsprechende displayunterstützende Ansteuerung. Dies ist mit geringem Platzbedarf im Gerät realisierbar.

## Patentansprüche

1. Funksprechgerät mit einem Tastenfeld mit Wähl- und Funktionstasten und einem Anzeigefeld (2), sowie mit Sende-/ Empfangs- und Steuereinrichtungen, **gekennzeichnet durch** wenigstens eine in verschiedene Richtungen eines kartesischen Koordinatensystems bewegliche Taste (5), über die die Ansteuerung bestimmter Funktionen und Darstellung auf dem Display erfolgt,
wobei es sich bei der beweglichen Taste (5) um eine Navigationstaste mit einer Bewegungsfreiheit in die vier Richtungen der *x*- und *y*-Achse des Koordinatenkreuzes handelt.

2. Funksprechgerät nach Anspruch 1, **dadurch gekennzeichnet, daß** die in verschiedene Richtungen eines kartesischen Koordinatensystems bewegliche Taste derart ausgestaltet ist, daß ein Druck auf diese Taste das Übernehmen einer gewählten Funktion bewirkt.

3. Funksprechgerät nach Anspruch 1 oder 2, **dadurch gekennzeichnet daß** mit der Bewegungsfreiheit der Taste in vier Richtungen eine Menueansteuerung erfolgt.

4. Funksprechgerät nach einem der Ansprüche 1 bis 3, **gekennzeichnet, durch** eine weitere Navigationstaste mit 360° Selektionsmöglichkeit.

## Claims

1. Radio telephone having a keypad with dialling and function keys and having a display panel (2), and also having transmission/reception and control devices, **characterized by** at least one key (5) which can move in various directions in a Cartesian coordinate system and is used for actuating particular functions and for presentation on the display, in which the movable key (5) is a navigation key with freedom of movement in the four directions of the x and y axes in the system of coordinates.

2. Radio telephone according to Claim 1, **characterized in that** the key which can move in various directions in a Cartesian coordinate system is in a form such that pressing this key accepts a chosen function.

3. Radio telephone according to one of Claims 1 and 2, **characterized in that** the key's freedom of movement in four directions is used for menu actuation.

4. Radio telephone according to one of Claims 1 to 3, **characterized by** a further navigation key with 360° selectivity.

## Revendications

1. Radiotéléphone comprenant un clavier avec des touches de composition et de fonction et un champ d'affichage (2), ainsi que des dispositifs d'émission/réception et de commande, **caractérisé par** au moins une touche (5) mobile dans différentes directions d'un système de coordonnées cartésien, par le biais de laquelle s'effectuent l'activation de fonctions déterminées et la représentation à l'écran,
la touche mobile (5) étant une touche de navigation disposant d'une liberté de mouvement dans les quatre directions des axes x et y du système d'axes de coordonnées.

2. Radiotéléphone selon la revendication 1, **caractérisé en ce que** la touche mobile dans différentes directions d'un système de coordonnées cartésien est exécutée de manière à ce qu'une pression sur cette touche provoque la prise en charge d'une fonction sélectionnée.

3. Radiotéléphone selon une des revendications 1 ou 2, **caractérisé en ce qu'**une activation des menus s'effectue grâce à la liberté de mouvement de la touche dans quatre directions.

4. Radiotéléphone selon une des revendications 1 à 3, **caractérisé par** une autre touche de navigation offrant une possibilité de sélection à 360°.
